# EUROPEAN PATENT SPECIFICATION

(11) **EP 2 879 353 B1**
(45) Date of publication and mention of the grant of the patent: **21.02.2018**
(21) Application number: 14193428.1
(22) Date of filing: 17.11.2014
(51) Int. Cl.: H04L 29/08, H04L 29/06, G06F 17/30

(54) **METHOD FOR CONTROLLING OPERATIONS OF A NETWORK SYSTEM**
VERFAHREN ZUR STEUERUNG DES BETRIEBS EINES NETZWERKSYSTEMS
PROCÉDÉ POUR COMMANDER LES OPÉRATIONS D'UN SYSTÈME DE RÉSEAU

(30) Priority: 28.11.2013 TW 102143515
(43) Date of publication of application: 03.06.2015
(73) Proprietor: Synology Incorporated, Taipei 103 (TW)
(72) Inventor: Li, Yu-Hua, 600 Chiayi City (TW); Chu, Bie-I, 320 Taoyuan County (TW); Lee, Wen-Sung, 220 New Taipei City (TW)
(74) Representative: Straus, Alexander

(56) References cited:
- US-A1- 2007 283 050
- US-A1- 2011 173 337
- US-A1- 2012 079 095

## Description

### Field of the Invention

The present invention presents a method for controlling operations of a network system, more particularly a method for controlling operations of a network system having a plurality of client terminals selectively uploading files to a server and the server simultaneously transmitting files to the selected plurality of client terminals.

### Background of the Invention

In the prior art, the basic method of file synchronization/sharing is installing an application program on a client terminal. The application program may then be used to monitor changes in the files of the client terminal and using a default transfer protocol, a changed file may be transferred to a server. In the server, the changed file may be recorded in the database and transferred to another client terminal. After performing the file synchronization/sharing, the latest content of the shared files recorded in the server may be completely copied to each of client terminals. US2007/283050A1 discloses a method of file synchronization, in which clients and a synchronization server exchange synchronization reports according to schedules. After receiving a synchronization report, a client or the server may request the transmission of modified files, irrespective of the file type. However, different client terminals may have different needs for shared files. If using the above described prior art, the client terminal may download or upload unneeded or unrelated files to the server. Therefore, not only is the storage space of the client terminal and the server is wasted, but also bandwidth and time for synchronizing unnecessary files is wasted.

### Summary of the Invention

An embodiment of the present invention presents a method for controlling operations of a network system according to claim 1. The network system comprises a server and a plurality of client terminals linked to the server. The method comprises the server establishing a file set; each of the client terminals establishing a directory; individually setting a first criterion and a second criterion for each of the client terminals, the first criterion being stored in each of the client terminals and is configured to set a first file schedule of each of the client terminals, and the second criterion being stored in the server and being configured to set a second file schedule of each of the client terminals; a first client terminal of the client terminals selectively uploading file(s) from the directory of the first client terminal to the server according to the first file schedule of the first client terminal, such that the server updates file(s) of the file set using the file(s) received from the first client terminal; and in response to updating of the file(s) of the file set, the server selectively transmitting updated content of the file(s) of the file set to each of the rest of the client terminals other than the first client terminal according to the second file schedule of each of the rest of the client terminals, such that each of the rest client terminals updates the file(s)of the directory of each of the rest client terminals using the updated content of the file(s) received from the server.

The method for controlling operations of the network system of an embodiment of the present invention may individually set the first criterion and the second criterion of different client terminals having the file(s) of the file set of the server selectively shared to the plurality of client terminals and each of the client terminals selectively upload the file(s) to the file set of the server. Therefore, because each of the client terminals need not download irrelevant or unneeded file(s) from the server and does not need to upload unneeded file(s) to the server, a file storage space of each of the client terminals may be efficiently used and not wasted on unnecessary bandwidth and time on synchronous data.

### Brief Description of the Drawings

The invention is further illustrated by way of example, taking reference to the accompanying drawings. Thereof:
FIG. 1 is a block diagram of a network system according to an embodiment of the present invention,
FIG. 2 is a block diagram of a first criterion and a second criterion corresponding to a client terminal according to an embodiment of the present invention,
FIG. 3 is a flowchart of the method of operation of the network system according to an embodiment of the present invention,
FIG.4 is a block diagram of a second criterion according to an embodiment of the present invention, and
FIG.5 is a block diagram of a first criterion and a second criterion according to an embodiment of the present invention.

### Detailed Description

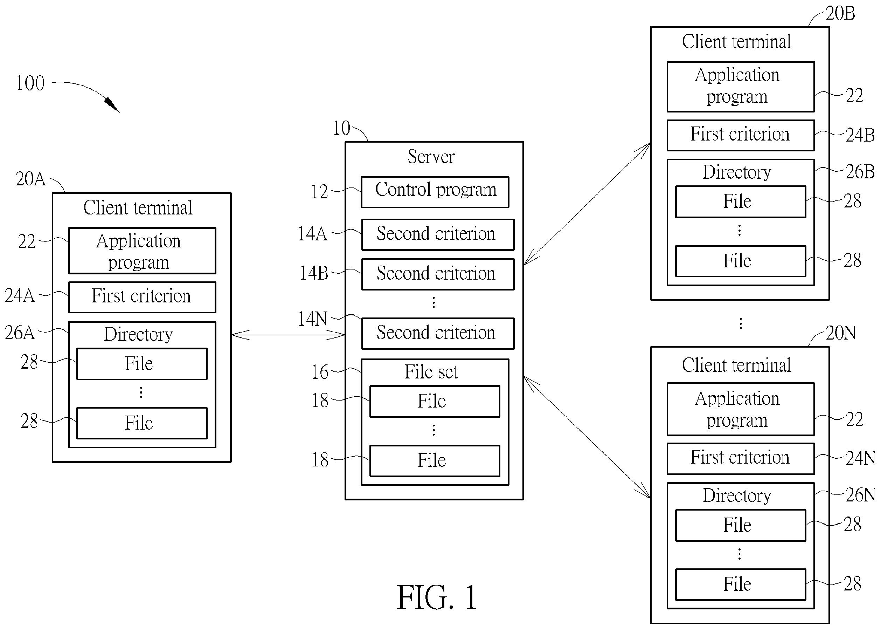

FIG.1 is a block diagram of a network system 100 according to an embodiment of the present invention. The network system 100 comprises a server 10 and a plurality of client terminals 20A to 20N. Each of the plurality of client terminals 20A to 20N may be linked to the server 10 to receive files from the server 10 and/or upload files to the server 10. The protocol between the server 10 and the plurality of client terminals 20A to 20N may be Common Internet File System (CIFS) protocol, File transfer protocol (FTP), Apple Filing Protocol (AFP), Network File System (NFS), Web Distributed Authoring and Versioning (WebDAV) protocol, other industry standard protocol, or specialized (personalized) protocol. Furthermore, although the network system 100 of FIG. 1 may comprise of the plurality of client terminals 20A to 20N, the number of client terminals is not limited to the number of client terminals in FIG. 1. In other words, the method of file sharing of the present invention may use two or more client terminals and a file server.

The server 10 may establish a file set 16 used for managing and storing of file(s) 18. The file(s) 18 of the file set 16 may be stored in a directory or in several different directories. A control program 12 may be installed in the server 10 and the server 10 may execute the control program 12 to manage the file sharing between the server 10 and the plurality of client terminals 20A to 20N. Each of the plurality of client terminals 20A to 20N may establish a directory 26A, 26B... or 26N used to store files downloaded from the server 10. Furthermore, each of the plurality of client terminals 20A to 20N may set and store a first criterion 24A, 24B... or 24N and each of the plurality of client terminals 20A to 20N may individually upload file(s) 28 of the directory 26A, 26B... or 26N according to the first criterion 24A, 24B... or 24N. And the server 10 may update the file(s) 18 of the file set 16 according to the file(s) 28 received from each of the plurality of client terminals 20A to 20N. In an embodiment of the present invention, each of the plurality of client terminals 20A to 20N may install an application program 22. Each of the plurality of client terminals 20A to 20N may execute the application program 22 to upload the file(s) 28 of the directory 26A, 26B... or 26N. When uploading the file(s) 28 to the server 10, the application program 22 may send file(s) 28 compatible to the first criterion 24A, 24B... or 24N to the server 10 according to the first criterion 24A, 24B... or 24N of each of the plurality of client terminals 20A to 20N.

For different client terminals 20A to 20N, the first criteria 24A to 24N may be individually set to selectively upload file(s) 28 of the directory 26A to 26N to the server 10. Therefore, the server 10 need not receive unrelated or unneeded file from the client terminals 20A to 20N. As a result, the bandwidth between each of the plurality of client terminals 20A to 20N and the server 10 may be effectively utilized and not wasted.

Furthermore, the server 10 records second criteria 14A to 14N of the plurality of client terminals 20A to 20N. Each of second criteria 14A to 14N corresponds to one of the plurality of client terminals 20A to 20N. For example, the second criterion 14A corresponds to the client terminal 20A, the second criterion 14B corresponds to the client terminal 20B, and the second criterion 14N corresponds to the client terminal 20N. Each of the second criteria 14A to 14N may be individually set to comply with the requirement of the corresponding client terminal 20A, 20B... or 20N. After the server 10 has received the file(s) 28 from one of the client terminals 20A, 20B... or 20N, the server 10 may selectively send the updated content of the file(s) 18 of the file set 16 to each of the rest of the client terminals according to the second criteria of the rest of the client terminals to update the file(s) 28 in the directory according to the updated content of the file(s) 18 received from the server 10. For example, when the server 10 receives the file(s) 28 from the client terminal 20A, the server 10 may update the file(s) 18 of the file set 16 according to the file(s) 28 received from the client terminal 20A, and selectively send the updated content of the file(s) 18 of the file set 16 to each of the rest of the client terminals 20B to 20N according to the second criteria 14B to 14N of the rest of the client terminals 20B to 20N to update the file(s) 28 of the directories 26B to 26N using the updated content of the file(s) 18 received from the server 10.

Furthermore, the server 10 may individually set the second criteria 14A to 14B of the client terminals 20A to 20N to selectively share the updated content of the file(s) 18 of the file set 16 to the plurality of client terminals 20A to 20N. Therefore, the plurality of client terminals 20A to 20N need not download any unnecessary or unneeded file. As a result, not only would the client terminals 20A to 20N efficiently use their won file storage spaces, but also not waste unnecessary bandwidth and time to download shared files.

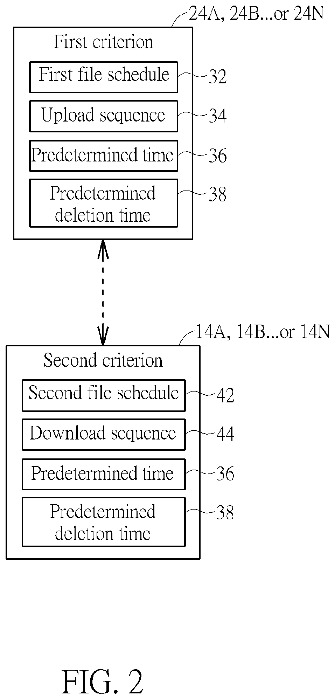

In an embodiment of the present invention, each of the first criteria 24A to 24N may set a first file schedule 32 and each of the second criteria 14A to 14N may a second file schedule 42. FIG. 2 is a block diagram of the first criterion 24A, 24B... or 24N and the second criterion 14A, 14B... or 14N corresponding to the client terminal 20A, 20B... or 20N according to an embodiment of the present invention. If FIG. 2 is the first criterion 24A and the second criterion 14A corresponding to the client terminal 20A, the first file schedule 32 of the first criterion 24A of the client terminal 20A may be the same as or different from the first file schedules 32 of other client terminals 20B to 20N. Each of the client terminals 20A to 20N may selectively upload the file(s) 28 of the directory 26A, 26B... or 26N to the server 10 according to the corresponding first file schedule 32 of each of the client terminals 20A to 20N. The first file schedule 32 of the embodiment may be set as a full time or one or more predetermined time periods. When the first file schedule 32 is full time, the corresponding client terminal 20A, 20B... or 20N may upload the file(s) 28 to the server 10 at any time; and when the first file schedule 32 is one or more predetermined time periods, the corresponding client terminal 20A, 20B... or 20N may upload the file(s) 28 to the server 10 during the one or more predetermined time periods.

In addition, the second file schedule 42 of the second criterion 14A corresponding to the client terminal 20A may or may not be the same as the second file schedules 42 corresponding to other client terminals 20B to 20N. The server 10 may selectively transmit the file(s) 18 of the file set 16 to each of the client terminals 20A to 20N according to the corresponding second file schedule 42 of each of the client terminals 20A to 20N. The second file schedule 42 of the embodiment may be set as a full time or one or more predetermined time periods. When the second file schedule 42 is full time, the server 10 may transmit the updated content of the file(s) 18 of the file set 16 to corresponding client terminal 20A, 20B... or 20N at any time; and when the second file schedule 42 is one or more predetermined time periods, the server 10 may transmit the updated content of the file(s) 18 of the file set 16 to corresponding client terminal 20A, 20B... or 20N during the one or more predetermined time periods.

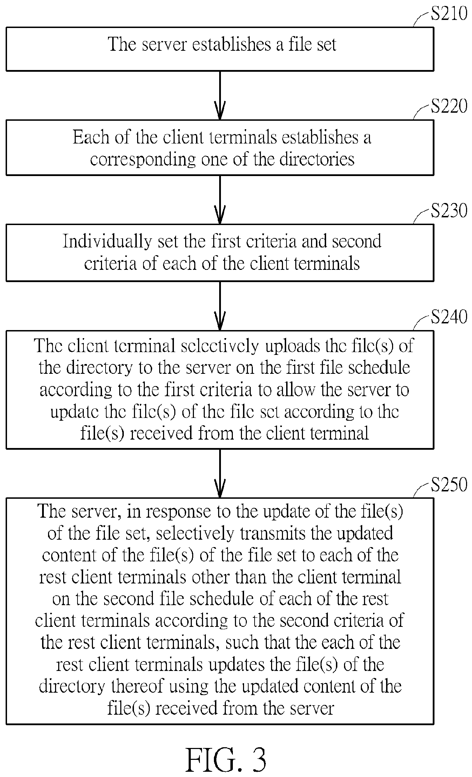

FIG. 3 is a flowchart of the method of operation of the network system 100 according to an embodiment of the present invention. The method for controlling operations of the network system 100 may include, but is not limited to, the following steps:
- Step S210:: The server 10 establishes a file set 16;
- Step S220:: Each of the client terminals 20A to 20N establishes a corresponding one of the directories 26A to 26N;
- Step S230:: Individually set the first criteria 24A to 24N and second criteria 14A to 14N of each of the client terminals 20A to 20N;
- Step S240:: The client terminal 20A selectively uploads the file(s) 28 of the directory 26A to the server 10 on the first file schedule 32 according to the first criteria 24A to allow the server 10 to update the file(s) 18 of the file set 16 according to the file(s) 28 received from the client terminal 20A; and
- Step S250:: The server 10, in response to the update of the file(s) 18 of the file set 16, selectively transmits the updated content of the file(s) 18 of the file set 16 to each of the rest of the client terminals 20B to 20N other than the client terminal 20A on the second file schedule 42 of each of the rest of the client terminals 20B to 20N according to the second criteria 14B to 14N of the rest the client terminals 20B to 20N, such that each of the rest of the client terminals 20B to 20N updates the file(s)28 of the directory 26B... or 26N thereof using the updated content of the file(s) 18 received from the server 10.

Wherein, the sequence of Steps S210 to S230 may be randomly set or changed and the client terminal 20A may be the first client terminal.

In an embodiment of the present invention, a corresponding upload sequence 34 of the file(s) 28 is set in each of the first criteria 24A to 24N and configured to set an upload priority of the file(s) 28 of the corresponding directory 26A, 26B... or 26N of each of the client terminals 24A to 24N, where the upload sequence 34 of each of the client terminals 20A to 20N may be same or different. Taking the first criterion 24A of the client terminal 20A in FIG.2 as an example, the upload sequence 34 of the first criterion 24A may be configured to set the upload priority of the file(s) 28 of the directory 26A of the client terminal 20A. Wherein, the file 28 having a higher upload priority value may be uploaded first to the server 10. For example, the upload sequence 34 of the first criterion 24A may set the document files (i.e. text file, PDF file, word file) to have the highest upload priority, followed by audio files (i.e. mp3 file) and have the rest of the files uploaded last. In this way, the client terminal 20A may first upload document files in the directory 26A to the server 10 according to the setting of the upload sequence 34. Afterwards, the client terminal 20A may then upload audio files to the server 10. And lastly, the client terminal 20A may lastly upload the remaining files to the server 10.

In an embodiment of the present invention, the upload sequence 34 of each of the first criteria 24A to 24N may be set according to the upload history of each of the client terminals 20A to 20N. For example, the client terminal 20A uploads document files most often, therefore, the application program 22 executed by the client terminal 20A may make the document files have the highest upload priority by setting the upload sequence 34 for the first criterion 24A.

In an embodiment of the present invention, a corresponding download sequence 44 of the file(s) 18 is set in each of the second criteria 14A to 14N and configured to set a corresponding download priority of the file(s) 18 of the file set 16, where a file 18 in the file set 16 corresponding to the client terminal 20A, 20B... or 20N having a higher download priority value is downloaded first to the corresponding client terminal 20A, 20B... or 20N. The download priority 44 of each of the client terminals 20A to 20N may be same or different. Taking the second criterion 14A corresponding to the client terminal 20A in FIG.2 as an example, the download sequence 44 of the second criterion 14A may be configured to set the download priority of the file(s) 18 of the file set 16 downloaded to the client terminal 20A. Wherein, file(s) 18 having higher download priority may be downloaded first to the client terminal 20A. For example, the download sequence 44 of the second criterion 14A may set the document files to have the highest download priority, followed by downloading of audio files, and have the rest of the files downloaded last. In this way, the server 10 may first transmit the document files in the file set 16 to the client terminal 20A according to the setting of the download sequence 44 in the second criterion 14A. Afterwards, the server 10 may transmit the audio files in the file set 16 to the client terminal 20A and the server 10 may lastly transmit the remaining files to the client terminal 20A.

In an embodiment of the present invention, the download sequence 44 of each of the second criteria 14A to 14N may be set according to download history of each of the client terminals 20A to 20N. For example, the client terminal 20A may download audio files most often, therefore, the control program 12 executed by the server 10 may make the audio files have the highest download priority by the setting the download sequence 44 of the second criterion 14A.

In an embodiment of the present invention, a length of a predetermined time 36 of a predetermined file 18 in the file set 16 may be set on each of the first criteria 24A to 24N and/or each of the second criteria 14A to 14N. Wherein, the length of the predetermined time 36 is configured to set the life cycle of the predetermined file 18 after being downloaded. For example, when the time after the server 10 transmits the predetermined file 18 to the client terminal 20B exceeds the length of the predetermined time, the application program 22 of the client terminal 20B may automatically delete the predetermined file 18 from the directory 26B of the client terminal 20B. Therefore, if the shared file is a paid for file (i.e. movie file), such sharing method may be used to limit the use of the paid for file within the length of the predetermined time.

In an embodiment of the present invention, a predetermined deletion time 38 of the predetermined file 18 in the file set 16 may be set on each of the first criteria 24A to 24 N and/or each of the second criteria 14A to 14N. The predetermined deletion time 38 is configured to set the time when the predetermined file 18 is deleted. For example, after the server 10 transmits the predetermined file 18 to the client terminal 20N, if a system time of the server 10 exceeds the predetermined deletion time, the application program 22 of the client terminal 20N may automatically delete the predetermined file 18 from the directory 26N of the client terminal 20N. Therefore, such sharing method may limit the use of the paid for file to time before the predetermined deletion time.

Furthermore, in an embodiment of the present invention, the application program 22 may be used to determine if each of the client terminals 20A to 20N is authorized to copy a predetermined downloaded file 18. If the application program 22 determines that any one of the client terminals 20A to 20N is copying or moving the predetermined downloaded file 18, the application program 22 may force the client terminals 20A to 20N performing copying or moving to delete the predetermined downloaded file 18 to avoid having the predetermined file 18 from being illegally copied or used. Therefore a better protection is provided to the predetermined downloaded file 18 that has a time-limited property.

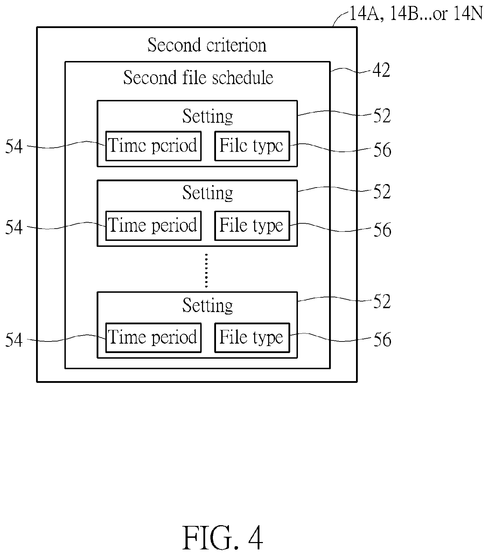

In an embodiment of the present invention, a second file schedule 42 of each of the client terminals 20A to 20N may have a plurality of settings 52. FIG.4 is a block diagram of a second criterion 14A, 14B... or 14N according to an embodiment of the present invention. Each of the second criteria 14A to 14N may have a plurality of settings 52. Each of the plurality of settings 52 is configured to record a time period 54 and a file type 56 allowed to be downloaded corresponding to the time period 54. The plurality of settings 52 of any one of the second criteria 14A to 14N may be the same or different from the plurality of settings 52 of another second criterion 14A, 14B... or 14N. Furthermore, the time periods 54 of each of the settings 52 of one of the second criteria 14A to 14N may be all different from each other. And, the file types 56 corresponding to the time periods 54 of one of the second criteria 14A to 14N may be the same or different from each other. For example, the second file schedule 42 may have three settings 52. The three settings 52 may correspond to three time periods 54 including morning, noon, and afternoon. The file types 56, allowed to be downloaded, of the three settings 52 may respectively be a system update file, a video file, and a document file. In this case, the server 10 may allow the downloading of the file(s) 18 that are system update files to the corresponding client terminal 20A, 20B... or 20N in the morning, allow the downloading of the file(s) 18 that are video files to the corresponding client terminal 20A, 20B... or 20N at noon, and allow the downloading of the file(s) 18 that are document file to the corresponding client terminal 20A, 20B... or 20N in the afternoon.

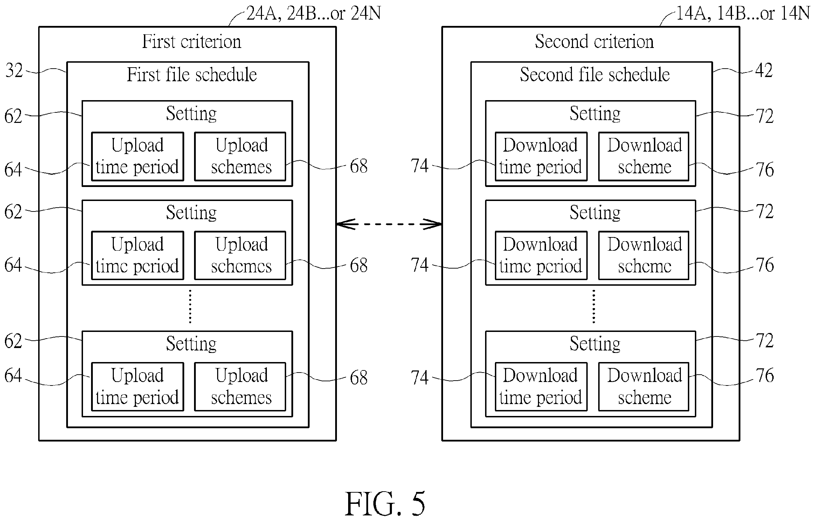

In an embodiment of the present invention, upload schemes 68 and upload time periods 64 of the first file schedule 32 may be set on the first criteria 24A to 24N. FIG.5 is a block diagram of a first criterion 24A, 24B... or 24N and a second criterion 14A, 14B... or 14N according to an embodiment of the present invention. Each of the first criteria 24A to 24N may include a plurality of settings 62. Each of the settings 62 is configured to record an upload time period 64 and an upload scheme 68 corresponding to the upload time period 64. The plurality of settings 62 of any of the first criteria 24A to 24N may be the same or different from the plurality of settings 62 of another first criterion 24A, 24B... or 24N. Furthermore, each the upload time periods 64 of each of the settings 62 of a first criterion 24A, 24B... or 24N may be all different from each other. And, the upload schemes 68 corresponding to the upload time periods 64 of a first criterion 24A, 24B... or 24N may be the same or different from each other. Each of the upload schemes 68 is configured to be a standard to correspond a client terminal 20A, 20B... or 20N with a file uploading rule of an upload time period 64. The file uploading rule may comprise but is not limited to a file upload sequence, a predetermined time period, a predetermined deletion time etc. mentioned in the above embodiments. Each of the client terminals 20A to 20N may separately and selectively upload the file(s) 18 from the directory 26A, 26B... or 26N to the server 10 according to the upload schemes 68 of each upload time period 64 of the first file schedule 32 of the client terminal.

In an embodiment of the present invention, a plurality of download time periods 74 and download schemes 76 of a second file schedule 42 may be separately set for each of the second criteria 14A to 14N. Each of the second criteria 14A to 14N may have a plurality of settings 72. Each setting 72 is configured to record a download time period 74 and a download scheme 76 corresponding to the download time period 74. The plurality of settings 72 of any of the second criteria 14A to 14N may be the same or different from the plurality of settings 72 of another second criterion 14A, 14B... or 14N. Furthermore, each the download time periods 74 of each of the settings 72 of a second criterion 14A, 14B... or 14N may be all different from each other. And, the download schemes 76 corresponding to the download time periods 74 of a second criterion 14A, 14B... or 14N may be the same or different from each other. Each download scheme 76 is configured to be a standard to correspond a client terminal 20A, 20B... or 20N with a file downloading rule of a download time period 74. The file downloading rule may comprise but is not limited to a file download sequence, a predetermined time period, a predetermined deletion time etc. mentioned in the above embodiments. The server 10 selectively transmits the file(s) 18 of the file set 16 to a corresponding one of the client terminals 20A to 20N according to the corresponding download schemes 76 of the download time periods 74 of the second file schedule 42.

In an embodiment of the present invention, the second criteria 14A to 14N of the server 10 may be set using an application program 22 executed by one of the client terminals 20A to 20N. For example, the network system 100 may be set in a company and the client terminal 20A may be the client terminal used by the network manager of the company. In the event that the network manager has the highest authority, the network manager may log into the server 10 through the client terminal 20A to set the second criteria 14A to 14N. The network manager may directly operate the server 10 to set the second criteria 14A to 14N.

Furthermore, in an embodiment of the present invention, each of the first criteria 24A to 24N is set to be compatible to the standard of the corresponding second criterion 14A, 14B... or 14N. In other words, in an embodiment of the present invention, each of the first criteria 24A to 24N may be set based on the corresponding second criterion 14A, 14B... or 14N. For example, the second criterion 14A may be set to allow the client terminal 20A to download mp3 or jpg files. Accordingly, the first criterion 24A may only be set according to the above mentioned setting (e.g. the client terminal 20A may be set to only be able to download mp3 files). In another example, the second criterion 14B may be set to only allow the client terminal 20B to perform file download during three download time periods. Therefore, the first criterion 24B is set according to the second criterion 14B. Thus, the allowable download time periods of the client terminal 20B may not exceed the three download time periods set in the second criterion 14B.

Furthermore, in an embodiment of the present invention, when a second criterion 14A, 14B... or 14N of a client terminal 20A, 20B... or 20N is updated, the server 10 may transmit the updated second criterion 14A, 14B... or 14N to the client terminal 20A, 20B... or 20N and have the updated second criterion 14A, 14B... or 14N downloaded by the client terminal 20A, 20B... or 20N to replace the corresponding first criterion 24A, 24B... or 24N of the client terminal 20A, 20B... or 20N.

In another embodiment of the present invention, the application program 22 may determine if the client terminals 20A to 20N have performed update, modify, delete, and/or move operations on the files 28 in the directories 26A to 26N. If the application program 22 detects any update, modify, delete, and/or move operation of the files 28 of the directories 26A to 26N of the client terminals 20A to 20N, the application program 22 may notify the control program 12 of the server 10 of the result of the determination for the control program 12 to perform corresponding update, modify, delete, and/or move operation on the files 18 of the file set 16. Similarly, the controller program 12 may determine if the server 10 has performed update, modify, delete, and/or move operation on the files 18 of the file set 16. If the application program 22 determined that the server 10 have performed update, modify, delete, and/or move operation on the files 18 of the file set 16, the control program 12 may notify the application program 22 of the client terminals 20A to 20N of the result of the determination for the application program 22 to perform corresponding update, modify, delete, and/or move operation on the files 28 of the directory 26A to 26N.

In summary, an embodiment of the method of the network system may be used to separately set first criteria and second criteria of client terminals for the client terminals to selectively upload files to a server and for the server to share files from the file set to the client terminals. Thus, the server and each of the client terminals need not receive unrelated or unneeded files. Not only can the server and the client terminals effectively use their own file storage spaces but also not waste unnecessary bandwidth and time to upload and download shared files. Furthermore, to respond to the variations of the files of the file set of the server, the server may be triggered to selectively transmit the files of the file set to each of the client terminals according to sync criteria of the files of the client terminals for each of the client terminals to be able to receive needed files from the server. In addition, the server may use different criteria on different client terminals to increase the security of the files of the file set of the server and avoid unauthorized user from downloading secure or important files.

All combinations and sub-combinations of above-described features also belong to the invention.

## Claims

1. A method of controlling operations of a network system (100), the network system comprising a server (10) and a plurality of client terminals (20A-20N) linked to the server (10), the method comprising:
the server establishing a file set (16);
each of the client terminals (20A-20N) establishing a directory;
individually setting for each of the client terminals (20A-20N) a first criterion (24A-24N) and a second criterion (14A-14N),
- the first criterion (24A-24N) being stored in each of the client terminals (20A-20N) and being configured to set a first file schedule for each of the client terminals (20A-20N), and
- the second criterion (14A-14N being stored in the server (10) and being configured to set the second file schedule for each of the client terminals (20A-20N), wherein the second criterion includes types of files allowed to be respectively downloaded from the server (10) to the client terminals (20A-20N) within a plurality of time periods of a second file schedule;
a first client terminal (20A) of the client terminals (20A-20N) selectively uploading file(s) (28) from the directory of the first client terminal (20A) to the server (10) according to the first file schedule for the first client terminal (20A), such that the server (10) updates file(s) (18) of the file set (16) using the file(s) (28) received from the first client terminal (20A) ; and
in response to updating of the file(s) (18) of the file set (16), the server (10) selectively transmitting updated content of the file(s) (18) of the file set (16) to each of the rest of the client terminals (20B-20N) other than the client terminal (20A) on the second file schedule for the each of the rest of the client terminals (20B-20N) according to the second criterion (14A-14N) for each of the rest of the client terminals (20B-20N), such that each of the rest of the client terminals (20B-20N) updates the file(s) (28) of the directory for each of the rest of the client terminals (20B-20N) using the updated content of the file(s) (18) received from the server (10) .

2. The method of claim 1, further comprising:
when updating the second criterion (14A-14N) for each of the client terminals (20A-20N), the server (10) transmits the updated second criterion (14A-14N) to each of the client terminals (20A-20N), such that the each of the client terminals (20A-20N) overwrites the first criterion (24A-24N) with the updated second criterion (14A-14N) received from the server (10).

3. The method of any of claims 1 or 2 wherein individually setting the first criterion (24A-24N) and the second criterion (14A-14N) for each of the client terminals (20A-20N) is further comprising:
setting an upload sequence of the file(s) (28) for each of the client terminals (20A-20N) on the first criterion (24A-24N), wherein the upload sequence is configured to set an upload priority of the file(s) of the directory of each of the client terminals (20A-20N), and a file (28) of the directory of each of the client terminals (20A-20N) having a higher upload priority value is uploaded first to the server (10).

4. The method of claim 3 wherein the upload sequence of the file(s) (28) of each of the client terminals (20A-20N) is set according to an upload history of the each of the client terminals (20A-20N), respectively.

5. The method of any of claims 1-4, wherein individually setting the first criterion (24A-24N) and the second criterion (14A-14N) of each of the client terminals (20A-20N) is further comprising:
setting a download sequence of the file(s) (28) of each of the client terminals (20A-20N) on the second criterion (14A-14N) of each of the client terminals (20A-20N), wherein the download sequence is configured to set a download priority of the file(s) (18) of the file set (16), and a file (18) of the file set (16) having a higher download priority value is downloaded first to each of the client terminals (20A-20N).

6. The method of claim 5, wherein the download sequence of the file(s) (28) of each of the client terminals (20A-20N) is set according to a download history of the each of the client terminals (20A-20N) respectively.

7. The method of any of claims 1-6, wherein step of the server (10) selectively transmitting the updated content of the file(s) (18) of the file set (16) to each of the rest of the client terminals (20B-20N) according on the second file schedule of each of the rest of the client terminals (20B-20N) according to the second criterion (14A-14N) of each of the rest of the client terminals (20B-20N) comprises:
the server (10) transmitting the file(s) (18) having types allowed to be respectively downloaded within the time periods of the second file schedule to each of the rest of the client terminals (20B-20N) according to the types of files (18) allowed to be respectively downloaded within the time periods of the second file schedule.

8. The method of any of claims 1-7, wherein individually setting the first criterion (24A-24N) and the second criterion (14A-14N) of each of the client terminals (20A-20N) is further comprising:
setting an upload scheme of each of upload time periods of the first file schedule of each of the client terminals (20A-20N) on the first criterion (24A-24N);
wherein each of the client terminals (20A-20N) selectively uploads file(s) (28) from the directory of each of the client terminals (20A-20N) to the server (10) according to the upload scheme of each of the upload time periods of the first file schedule.

9. The method of any of claim 1-8, wherein individually setting the first criterion (24A-24N) and the second criterion (14A-14N) is further comprising:
setting a download scheme of each of download time periods of the second file schedule of each of the client terminals (20A-20N) on the second criterion (14A-14N) of the each client terminals (20A-20N);
wherein the server (10) selectively transmits file(s) (18) of the file set (16) to each of the client terminals (20A-20N) according to the download scheme of each of the download time periods of the second file schedule of each of the client terminals (20A-20N).

10. The method of any of claims 1-9, wherein individually setting the first criterion (24A-24N) and the second criterion (14A-14N) is further comprising:
setting a length of a predetermined time of a predetermined file (18, 28) on the first criterion (24A-24N) and/or the second criterion (14A-14N);
wherein the method further comprises:
automatically deleting the predetermined file (18, 28) from the directory of the another client terminal (20B) when the time from when the server (10) sends the predetermined file (18) to the another client terminal (20B) of the client terminals (20A-20N) exceeds the length of a predetermined time.

11. The method of claims 10, wherein individually setting the criterion of each of the client terminals (20A-20N) is further comprising:
setting a predetermined deletion time of the predetermined file (18, 28) on the first criterion (24A-24N) and/or the second criterion (14A-14N);
wherein the method further comprises:
automatically deleting the predetermined file (18, 28) from the directory of the another client terminal (20B) if a system time of the server (10) exceeds the predetermined deletion time.

12. The method of any of claims 1-9, wherein individually setting the criterion of each of the client terminals (20A-20N) is further comprising:
setting a predetermined deletion time of a predetermined file (18, 28) on the first criterion (24A-24N) and/or the second criterion (14A-14N);
wherein the method further comprises:
automatically deleting the predetermined file (18, 28) from the directory of the another client terminal (20B) if a system time of the server (10) exceeds the predetermined deletion time after the server sends the predetermined file to the another client terminal (20B) of the client terminals (20A-20N).

13. The method of any of claims 1-12, wherein the first criterion (24A-24N) of the each of the client terminals (20A-20N) being set according to the second criterion (14A-14N) of each of the client terminals (20A-20N).

14. The method of any of claims 1-13, wherein the first criterion (24A-24N) of the each of the client terminals (20A-20N) being defined to fully conform to the second criterion (14A-14N) of each of the client terminals (20A-20N).

## Patentansprüche

1. Verfahren zur Steuerung des Betriebs eines Netzwerk-Systems (100), worin das Netzwerk-System (100) einen Server (10) und mehrere Client-Terminals (20A-20N) umfasst, die mit dem Server (10) verbunden sind, worin das Verfahren **gekennzeichnet ist durch**:
der Server (10) erstellt einen Datei-Satz (16);
jeder der Client-Terminals (20A-20N) erstellt einen Ordner;
für jeden der Client-Terminals (20A-20N) wird ein erstes Kriterium (24A-24N) und ein zweites Kriterium (14A-14N) individuell erstellt;
- worin das erste Kriterium (24A-24N) in jedem Client-Terminal (20A-20N) gespeichert und ausgestaltet ist, für jeden der Client-Terminals (20A-20N) ein erstes Datei-Schema zu erstellen, und
- worin das zweite Kriterium (14A-14N) in dem Server (10) gespeichert und ausgestaltet ist, für jeden der Client-Terminals (20A-20N) das zweite Datei-Schema zu erstellen; worin das zweite Kriterium Datei-Typen umfasst, die jeweils von dem Server (10) zu den Client-Terminals (20A-20N) innerhalb mehrerer Zeitspannen eines zweiten Datei-Schemas heruntergeladen werden können;
worin ein erstes Client-Terminal (20A) der Client-Terminals (20A-20N) selektiv Datei(n) (28) aus dem Ordner des ersten Client-Terminals (20A) zu dem Server (10) gemäß dem ersten Datei-Schema für das erste Client-Terminal (20A) hochlädt, so dass der Server (10) Datei(n) (18) des Datei-Satzes (16) unter Verwendung von von dem ersten Client-Terminal (20A) empfangenen Datei(n) (28) aktualisiert; und
worin in Antwort auf das Aktualisieren der Datei(n) (18) des Datei-Satzes (16), der Server (10) selektiv den aktualisierten Inhalt der Datei(n) (18) des Datei-Satzes (16) zu jedem der verbleibenden Client-Terminals (20B-20N) außer dem Client-Terminal (20A) an das zweite Datei-Schema für jede der verbleibenden Client-Terminals (20B-20N) gemäß dem zweiten Kriterium (14A-14N) für jeden der verbleibenden Client-Terminals (20B-20N) überträgt, so dass jeder der verbleibenden Client-Terminals (20B-20N) die Datei(n) (28) des Ordners für jeden der verbleibenden Client-Terminals (20B-20N) unter Verwendung des aktualisierten Inhalts der von dem Server (10) empfangenen Datei(n) (18) aktualisiert.

2. Verfahren nach Anspruch 1, welches weiter umfasst:
wenn das zweite Kriterium (14A-14N) für jeden der Client-Terminals (20A-20N) aktualisiert wird, dann überträgt der Server (10) das aktualisierte zweite Kriterium (14A-14N) zu jedem der Client-Terminals (20A-20N), so dass jeder der Client-Terminals (20A-20N) das erste Kriterium (24A-24N) mit dem aktualisierte zweiten Kriterium (14A-14N), die von dem Server (10) empfangen wird, überschreibt.

3. Verfahren nach einem der Ansprüche 1 oder 2, worin individuelles Erstellen des ersten Kriteriums (24A-24N) und des zweiten Kriteriums (14A-14N) für jeden der Client-Terminals (20A-20N) weiter umfasst:
Erstellen einer Upload-Sequenz der Datei(n) (28) für jeden der Client-Terminals (20A-20N) an dem ersten Kriterium (24A-24N), worin die Upload-Sequenz ausgestaltet ist, eine Upload-Priorität der Datei(n) des Ordners eines jeden der Client-Terminals (20A-20N) zu erstellen, worin eine Datei (28) des Ordners eines jeden der Client-Terminals (20A-20N) mit einem höheren Upload Prioritätswert zuerst zu dem Server (10) hochgeladen wird.

4. Verfahren nach Anspruch 3 worin die Upload-Sequenz der Datei(n) (28) eines jeden der Client-Terminals (20A-20N) gemäß einer Upload-Historie eines jeden der Client-Terminals (20A-20N) erstellt wird.

5. Verfahren nach einem der Ansprüche 1 - 4, worin individuelles Erstellen des ersten Kriteriums (24A-24N) und des zweiten Kriteriums (14A-14N) eines jeden Client-Terminals (20A-20N) weiter umfasst:
Erstellen einer Download-Sequenz der Datei(n) (28) eines jeden der Client-Terminals (20A-20N) an dem zweiten Kriterium (14A-14N) jedes Client-Terminals (20A-20N), worin die Download-Sequenz ausgestaltet ist, eine Download-Priorität der Datei(n) (18) des Datei-Satzes (16) zu erstellen, worin eine Datei (18) des Datei-Satzes (16) mit einem höheren Download-Prioritätswert zuerst zu jedem der Client-Terminals (20A-20N) heruntergeladen wird.

6. Verfahren nach Anspruch 5, worin die Download-Sequenz der Datei(n) (28) eines jeden der Client-Terminals (20A-20N) gemäß einer Download-Historie eines jeden der Client-Terminals (20A-20N) erstellt wird.

7. Verfahren nach einem der Ansprüche 1 - 6, worin der Schritt, dass der Server (10) den aktualisierten Inhalt der Datei(n) (18) des Datei-Satzes (16) selektiv zu jedem der verbleibenden Client-Terminals (20B-20N) gemäß dem zweiten Datei-Schema eines jeden der verbleibenden Client-Terminals (20B-20N) gemäß dem zweiten Kriterium (14A-14N) eines jeden der verbleibenden Client-Terminals (20B-20N) überträgt, umfasst:
der Server (10) überträgt die Datei(n)-Typen (18), die jeweils heruntergeladen werden könne innerhalb der Zeitspannen des zweiten Datei-Schemas zu jedem der verbleibenden Client-Terminals (20B-20N) gemäß den Datei-Typen (18), die innerhalb der Zeitspannen des zweiten Datei-Schemas jeweils heruntergeladen werden dürfen.

8. Verfahren nach einem der Ansprüche 1 - 7, worin individuelles Erstellen des ersten Kriteriums (24A-24N) und des zweiten Kriteriums (14A-14N) eines jeden der Client-Terminals (20A-20N) weiter umfasst:
Erstellen eines Upload-Schemas einer jeden Upload-Zeitspanne des ersten Datei-Schemas eines jeden der Client-Terminals (20A-20N) an dem ersten Kriterium (24A-24N);
worin jedes der Client-Terminals (20A-20N) selektiv Datei(n) (28) aus dem Ordner eines jeden der Client-Terminals (20A-20N) zu dem Server (10) gemäß dem Upload-Schema einer jeden Upload-Zeitspanne des ersten Datei-Schemas hochlädt.

9. Verfahren nach einem der Ansprüche 1-8, worin individuelles Erstellen des ersten Kriteriums (24A-24N) und des zweiten Kriteriums (14A-14N) weiter umfasst:
Erstellen eines Download-Schemas einer jeden Download-Zeitspanne des zweiten Datei-Schemas eines jeden Client-Terminals (20A-20N) an dem zweiten Kriterium (14A-14N) jedes Client-Terminals (20A-20N);
worin der Server (10) selektiv Datei(n) (18) des Datei-Satzes (16) zu jedem der Client-Terminals (20A-20N) gemäß dem Download-Schema eines jeden der Download-Zeitspannen des zweiten Datei-Schemas eines jeden Client-Terminals (20A-20N) überträgt.

10. Verfahren nach einem der Ansprüche 1 - 9, worin individuelles Erstellen des ersten Kriteriums (24A-24N) und des zweiten Kriteriums (14A-14N) weiter umfasst:
Erstellen einer Länge einer bestimmten Zeitspanne einer bestimmten Datei (18, 28) an dem ersten Kriterium (24A-24N) und/oder dem zweiten Kriterium (14A-14N);
worin das Verfahren weiter umfasst:
automatisches Löschen der bestimmten Datei (18, 28) aus dem Ordner des anderen Client-Terminals (20B), wenn der Zeitpunkt, zu dem der Server (10) die bestimmte Datei (18) zu dem anderen Client-Terminal (20B) der Client-Terminals (20A-20N) sendet, die Länge einer bestimmten Zeitspanne überschreitet.

11. Verfahren nach Anspruch 10, worin individuelles Erstellen des Kriteriums eines jeden der Client-Terminals (20A-20N) weiter umfasst:
Erstellen einer bestimmten Löschzeit der bestimmten Datei (18, 28) an dem ersten Kriterium (24A-24N) und/oder dem zweiten Kriterium (14A-14N);
worin das Verfahren weiter umfasst:
automatisches Löschen der bestimmten Datei (18, 28) aus dem Ordner des anderen Client-Terminals (20B), wenn eine Systemzeit des Servers (10) die bestimmte Löschzeit überschreitet.

12. Verfahren nach einem der Ansprüche 1 - 9, worin individuelles Erstellen des Kriteriums eines jeden Client-Terminals (20A-20N) weiter umfasst:
Erstellen einer bestimmten Löschzeit einer bestimmten Datei (18, 28) an dem ersten Kriterium (24A-24N) und/oder dem zweiten Kriterium (14A-14N);
worin das Verfahren weiter umfasst:
automatisches Löschen der bestimmten Datei (18, 28) aus dem Ordner des anderen Client-Terminals (20B), wenn eine Systemzeit des Servers (10) die bestimmte Löschzeit überschreitet, nachdem der Server die bestimmte Datei zu dem anderen Client-Terminal (20B) der Client-Terminals (20A-20N) sendet.

13. Verfahren nach einem der Ansprüche 1 - 12, worin das erste Kriterium (24A-24N) eines jeden der Client-Terminals (20A-20N) gemäß dem zweiten Kriterium (14A-14N) eines jeden der Client-Terminals (20A-20N) erstellt wird.

14. Verfahren nach einem der Ansprüche 1 - 13, worin das erste Kriterium (24A-24N) eines jeden der Client-Terminals (20A-20N) definiert ist, dem zweiten Kriterium (14A-14N) eines jeden Client-Terminals (20A-20N) voll zu entsprechen.

## Revendications

1. Procédé de commande des opérations d'un système de réseau (100), le système de réseau comprenant un serveur (10) et une pluralité de terminaux clients (20A-20N) liés au serveur (10), le procédé comprenant :
le serveur établissant un ensemble de fichiers (16) ;
chacun des terminaux clients (20A-20N) établissant un répertoire ;
la définition individuelle pour chacun des terminaux clients (20A-20N) d'un premier critère (24A-24N) et d'un second critère (14A-14N),
- le premier critère (24A-24N) étant stocké dans chacun des terminaux clients (20A-20N) et étant configuré pour définir une première planification de fichier pour chacun des terminaux clients (20A-20N), et
- le second critère (14A-14N) étant stocké dans le serveur (10) et étant configuré pour définir la seconde planification de fichier pour chacun des terminaux clients (20A-20N), le second critère comprenant des types de fichiers autorisés à être respectivement téléchargés du serveur (10) vers les terminaux clients (20A-20N) au sein d'une pluralité de périodes d'une seconde planification de fichier ;
un premier terminal client (20A) des terminaux clients (20A-20N) téléchargeant sélectivement en amont un ou des fichier(s) (28) provenant du répertoire du premier terminal client (20A) vers le serveur (10) selon la première planification de fichier pour le premier terminal client (20A), de telle sorte que le serveur (10) met à jour le ou les fichier(s) (18) de l'ensemble de fichiers (16) en utilisant le ou les fichier(s) (28) reçu(s) du premier terminal client (20A) ; et
en réponse à la mise à jour du ou des fichier(s) (18) de l'ensemble de fichiers (16), le serveur (10) transmettant sélectivement le contenu mis à jour du ou des fichier(s) (18) de l'ensemble de fichiers (16) vers chacun du reste des terminaux clients (20B-20N) autres que le terminal client (20A) sur la seconde planification de fichier pour chacun du reste des terminaux clients (20B-20N) selon le second critère (14A-14N) pour chacun du reste des terminaux clients (20B-20N), de telle sorte que chacun du reste des terminaux clients (20B-20N) met à jour le ou les fichier(s) (28) du répertoire pour chacun du reste des terminaux clients (20B-20N) en utilisant le contenu mis à jour du ou des fichier(s) (18) reçu(s) du serveur (10).

2. Procédé selon la revendication 1, comprenant en outre :
lors de la mise à jour du second critère (14A-14N) pour chacun des terminaux clients (20A-20N), le serveur (10) transmet le second critère mis à jour (14A-14N) à chacun des terminaux clients (20A-20N), de telle sorte que chacun des terminaux clients (20A-20N) écrase le premier critère (24A-24N) avec le second critère mis à jour (14A-14N) reçu du serveur (10).

3. Procédé selon l'une quelconque des revendications 1 ou 2, le fait de définir individuellement le premier critère (24A-24N) et le second critère (14A-14N) pour chacun des terminaux clients (20A-20N) comprenant en outre :
le fait de définir une séquence de téléchargement amont du ou des fichier(s) (28) pour chacun des terminaux clients (20A-20N) sur le premier critère (24A-24N), la séquence de téléchargement amont étant configurée pour définir une priorité de téléchargement amont du ou
des fichier(s) du répertoire de chacun des terminaux clients (20A-20N), et un fichier (28) du répertoire de chacun des terminaux clients (20A-20N) possédant une valeur de priorité de téléchargement amont plus élevée est d'abord téléchargé en amont vers le serveur (10).

4. Procédé selon la revendication 3, la séquence de téléchargement amont du ou des fichier(s) (28) de chacun des terminaux clients (20A-20N) étant définie selon un historique de téléchargement amont de chacun des terminaux clients (20A-20N), respectivement.

5. Procédé selon l'une quelconque des revendications 1 ou 4, le fait de définir individuellement le premier critère (24A-24N) et le second critère (14A-14N) de chacun des terminaux clients (20A-20N) comprenant en outre :
la définition d'une séquence de téléchargement aval du ou des fichier(s) (28) de chacun des terminaux clients (20A-20N) sur le second critère (14A-14N) de chacun des terminaux clients (20A-20N), la séquence de téléchargement aval étant configurée pour définir une priorité de téléchargement aval du ou des fichier(s) (18) de l'ensemble de fichiers (16), et un fichier (18) de l'ensemble de fichiers (16) possédant une valeur plus élevée de priorité de téléchargement aval est d'abord téléchargé en aval vers chacun des terminaux clients (20A-20N).

6. Procédé selon la revendication 5, la séquence de téléchargement aval du ou des fichier(s) (28) de chacun des terminaux clients (20A-20N) étant définie selon un historique de téléchargement aval de chacun des terminaux clients (20A-20N), respectivement.

7. Procédé selon l'une quelconque des revendications 1 à 6, l'étape du serveur (10) transmettant sélectivement le contenu mis à jour du ou des fichier(s) (18) de l'ensemble de fichiers (16) vers chacun du reste des terminaux clients (20B-20N) selon la seconde planification de fichier de chacun du reste des terminaux clients (20B-20N) selon le second critère (14A-14N) de chacun du reste des terminaux clients (20B-20N) comprenant :
le serveur (10) transmettant le ou les fichier(s) (18) possédant des types autorisés à être respectivement téléchargés en aval au sein des périodes de la seconde planification de fichier vers chacun du reste des terminaux clients (20B-20N) selon les types de fichiers (18) autorisés à être respectivement téléchargés en aval au sein des périodes de la seconde planification de fichier.

8. Procédé selon l'une quelconque des revendications 1 ou 7, le fait de définir individuellement le premier critère (24A-24N) et le second critère (14A-14N) de chacun des terminaux clients (20A-20N) comprenant en outre :
la définition d'un schéma de téléchargement amont de chacune des périodes de téléchargement amont de la première planification de fichier de chacun des terminaux clients (20A-20N) sur le premier critère (24A-24N) ;
chacun des terminaux clients (20A-20N) téléchargeant sélectivement en amont le ou les fichier(s) (28) du répertoire de chacun des terminaux clients (20A-20N) vers le serveur (10) selon le schéma de téléchargement amont de chacune des périodes de téléchargement amont de la première planification de fichier.

9. Procédé selon l'un quelconque des revendications 1 à 8, le fait de définir individuellement le premier critère (24A-24N) et le second critère (14A-14N) comprenant en outre :
la définition d'un schéma de téléchargement aval de chacune de périodes de téléchargement aval de la seconde planification de fichier de chacun des terminaux clients (20A-20N) sur le second critère (14A-14N) de chacun des terminaux clients (20A-20N) ;
le serveur (10) transmettant sélectivement le ou les fichier(s) (18) de l'ensemble de fichiers (16) vers chacun des terminaux clients (20A-20N) selon le schéma de téléchargement aval de chacune des périodes de téléchargement aval de la seconde planification de fichier de chacun des terminaux clients (20A-20N).

10. Procédé selon l'une quelconque des revendications 1 à 9, le fait de définir individuellement le premier critère (24A-24N) et le second critère (14A-14N) comprenant en outre :
la définition d'une longueur d'un temps prédéterminé d'un fichier prédéterminé (18, 28) sur le premier critère (24A-24N) et/ou le second critère (14A-14N) ;
le procédé comprenant en outre :
la suppression automatique du fichier prédéterminé (18, 28) du répertoire de l'autre terminal client (20B) lorsque le temps à partir duquel le serveur (10) envoie le fichier prédéterminé (18) vers l'autre terminal client (20B) des terminaux clients (20A-20N) dépasse la longueur d'un temps prédéterminé.

11. Procédé selon la revendication 10, le fait de définir individuellement le critère de chacun des terminaux clients (20A-20N) comprenant en outre :
la définition d'un temps prédéterminé de suppression du fichier prédéterminé (18, 28) sur le premier critère (24A-24N) et/ou le second critère (14A-14N) ;
le procédé comprenant en outre :
la suppression automatique du fichier prédéterminé (18, 28) du répertoire de l'autre terminal client (20B) si un temps système du serveur (10) dépasse le temps prédéterminé de suppression.

12. Procédé selon l'une quelconque des revendications 1 à 9, le fait de définir individuellement le critère de chacun des terminaux clients (20A-20N) comprenant en outre :
la définition d'un temps prédéterminé de suppression d'un fichier prédéterminé (18, 28) sur le premier critère (24A-24N) et/ou le second critère (14A-14N) ;
le procédé comprenant en outre :
la suppression automatique du fichier prédéterminé (18, 28) du répertoire de l'autre terminal client (20B) si un temps système du serveur (10) dépasse le temps prédéterminé de suppression après que le serveur envoie le fichier prédéterminé vers l'autre terminal client (20B) des terminaux clients (20A-20N).

13. Procédé selon l'une quelconque des revendications 1 à 12, le premier critère (24A- 24N) de chacun des terminaux clients (20A-20N) étant défini selon le second critère (14A-14N) de chacun des terminaux clients (20A-20N).

14. Procédé selon l'une quelconque des revendications 1 à 13, le premier critère (24A- 24N) de chacun des terminaux clients (20A-20N) étant défini pour se conformer complètement au second critère (14A-14N) de chacun des terminaux clients (20A-20N).
